# EUROPEAN PATENT SPECIFICATION

(11) **EP 2 038 830 B1**
(45) Date of publication and mention of the grant of the patent: **20.01.2010**
(21) Application number: 07747647.1
(22) Date of filing: 31.05.2007
(51) Int. Cl.: G06Q 30/00, H04L 12/58

(54) **METHOD, DEVICE AND SYSTEM FOR COMMUNICATING INFORMATION**
VERFAHREN, EINRICHTUNG UND SYSTEM ZUM ÜBERMITTELN VON INFORMATIONEN
PROCÉDÉ, DISPOSITIF ET SYSTÈME DE COMMUNICATION D'INFORMATIONS

(30) Priority: 14.06.2006 NO 20062799; 23.03.2007 NO 20071529
(43) Date of publication of application: 25.03.2009
(73) Proprietor: Telenor ASA, 1331 Fornebu (NO)
(72) Inventor: MELLA, Heidi, Rognskog, N-0689 Oslo (NO); SVENKERUD, Lars, N-1794 Sponvika (NO)
(74) Representative: Onsagers Ltd
(86) International application number: PCT/NO2007/000188
(87) International publication number: WO 2007/145527

(56) References cited:
- GB-A- 2 413 405
- US-A1- 2006 047 568

## Description

### Field of the invention

The present invention relates to a computer-implemented method, a device and a system for communicating information in the form of notices to be displayed on a display device.

### Background to the invention

There is a general need to communicate occurrences/events, or to provide information concerning the sale or purchase of products and services.

According to related, previously known solutions, notices are sporadically posted on notice boards, for example in shops or other busy places. This practice has several drawbacks: the users have little control over how long the notice remains there; entrance areas often appear untidy to both shop-owners and the public; in some places it is forbidden to post information, while in other places permission must be sought; the public may find that information on notices is altered or removed; when private telephone numbers or address information are specified on the notices, it makes it possible for outsiders to obtain sensitive personal information. In some cases, therefore, people are reluctant to post notices.

US-2006/0047568 discloses a method and system for accommodating a person's desires of meeting, locating and/or attracting others for dating, contact or human discourse, or a person's desires of acquiring certain objects or collectibles, or news in general, or business, financial or sport/betting information and the like, by a person placing or answering an advertisement on the Internet or other public medium.

### Summary of the invention

According to a first aspect of the invention, a computer-implemented method is provided for communicating information in the form of notices to be displayed on a display device, as indicated in the following, independent claim 1.

According to a second aspect of the invention, an information-communicating device is provided for passing on information in the form of notices to be displayed on a display device, as indicated in the following, independent claim 13.

According to a third aspect of the invention, a system is provided for communicating information in the form of notices to be displayed on a display device, as indicated in the following, independent claim 16.

Further features and aspects of the invention will become apparent in the dependent claims.

### Brief description of the drawings

The invention will now be described in greater detail in the form of non-limiting examples, and with reference to the attached drawings, in which
fig. 1 is a schematic block diagram for a system according to the invention,
fig. 2 is a schematic flow diagram for a communication process according to the invention,
fig. 3 is an alternative, schematic block diagram for a system according to the invention,
fig. 4 is a schematic block diagram illustrating communication on the response of an information recipient to a notice,
fig. 5 is schematic flow charts illustrating two alternative communication flow processes on the response of an information recipient to a notice,
fig. 6 is a schematic block diagram for a display device,
fig. 7 is a schematic flow chart illustrating a method according to the invention.

### Detailed description of the invention

The invention results in an electronic screen-based notice board for exchanging information interactively between persons in shops, shopping centres and public places.

The information is transmitted by an information supplier as text and picture messages (SMS, MMS) to a telephone number specified on the board. The message appears as a notice on the screen. The notice is automatically assigned a code. The public, for example passers-by, can read and respond to the notice by sending a message back to this code. When an information recipient responds to a notice, a text message with contact information will automatically be sent to the information supplier, i.e. the person who has "posted" the notice. The messages on the board may, for example, be information concerning a cultural arrangement in the local community, or a notice expressing the wish to sell/buy a specific product or service.

According to an aspect of the invention the information supplier does not need to reveal his private telephone number or similar sensitive personal information to the public, since all communication between the information supplier and information recipients is conducted via an assigned code.

In other cases it may however be appropriate and intentional that such personal information shall be revealed to the public.

The information supplier will be sure that the information reaches its goal, since presentation data appear on the board as soon as it is transmitted from the mobile phone, and a single text message is transmitted back to the sender when it is distributed.

The information supplier himself can decide how much column space the notice or message should have, for how long a period the information should be available, and the distribution on several geographically scattered screens.

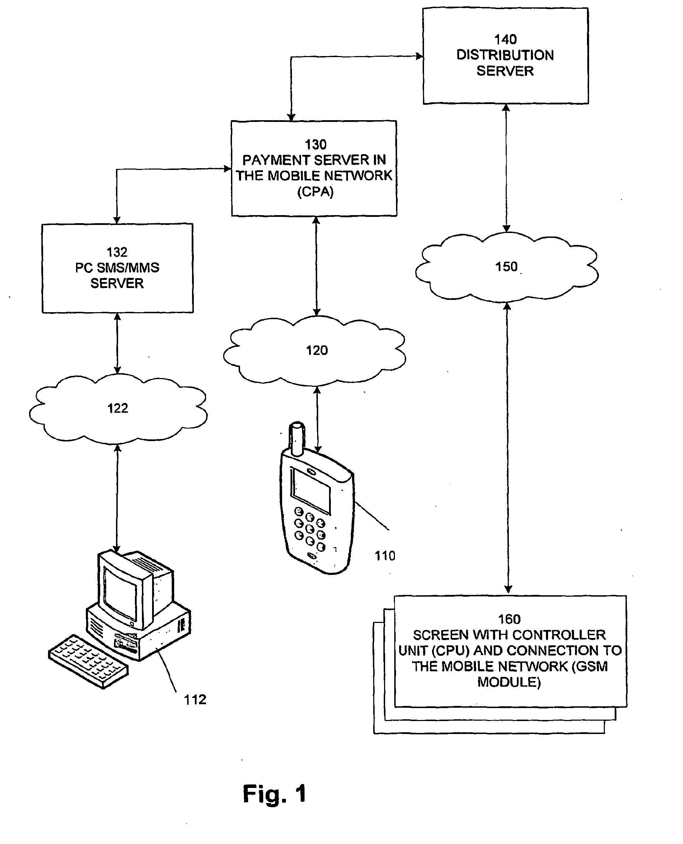

Figure 1 below is a schematic general diagram of a system according to the invention. An information supplier who wishes to post a notice on a specific display device can do this by means of a mobile communication terminal, such as a mobile telephone 110, which communicates with a server 130 via a mobile communication network 120 such as GSM/GPRS or UMTS/3G.

Alternatively, the information supplier can communicate by means of a personal computer 112, which communicates via a general data communication network 122, for example based on TCP/IP. The network 122, for example, is represented by the Internet, possibly including a wired or wireless local network.

Where the information supplier communicates by means of the mobile telephone 110, the information supplier formulates a notice on the mobile phone in the form of a first message, usually an MMS, comprising text and video information. In this connection, video information should be taken to mean a still picture, an animation or a video clip. Alternatively the video information may be omitted. It is also possible to use SMS with text only.

The first message includes address data identifying at least one display device 160 which the information supplier wishes to employ, and presentation data representing information in the notice to be displayed on the display device 160.

The address data may be a unique number or a name identifying a display device 160. The address data may be a telephone number associated with the display device.

The information supplier may order a notice by sending the MMS message to a payment server 130 in the mobile communication network, more specifically a payment server identified by a CPA (Content Provider Access) telephone number.

The term payment server or CPA server should be understood to refer to a server which enables the costs connected with a service executed by the server to be charged to the end user in cooperation with the mobile operator, where the mobile operator handles the settlement with the end user.

This results in the message being transmitted via the mobile communication network 120 to the payment server (CPA), which arranges for the initiation of a payment or invoicing transaction for charging the information supplier. The payment server 130 passes on the message to a distribution server 140.

Amongst the tasks of the distribution server 140 is the distribution of the notice to a specified display device 160 on the basis of the address data provided by the information supplier. The distribution server 140 contains a database with address information and telephone number of all the display devices included in the total system. The distribution server 140 reformats the MMS message it has received and transmits it to the relevant display device 160. The notice is then displayed on the display device. The distribution server also transmits an acknowledgement message to the payment server (CPA), which passes on the acknowledgement to the information supplier by means of the mobile terminal 110. Each notice has a unique notice identification which is displayed with each notice.

In figure 1 only one display device 160 is shown, but it should be understood that an arbitrary number of display devices 160 may be included in the system and be handled by the distribution server 140.

In an embodiment the reformatting of the MMS message in the distribution server 140 may be carried out in the following manner:
- Video information is kept unchanged.
- The address information is removed and used to find the telephone number of the display device that has been selected.
- This telephone number is used as the new recipient number in the MMS message.
- The distribution server inserts a housekeeping header in the MMS message's text field. This header may, e.g., contain authentification, size of the notice and period of the notice.

In an embodiment the communication between the distribution server 140 and the payment server 130 takes place via a TCP/IP interface. It should be understood that an arbitrary number of network elements and communication paths may be involved in this communication, and that the distribution server 140 and the payment server 130 may be situated in separate physical locations. Alternatively, the servers may be composed of one and the same unit.

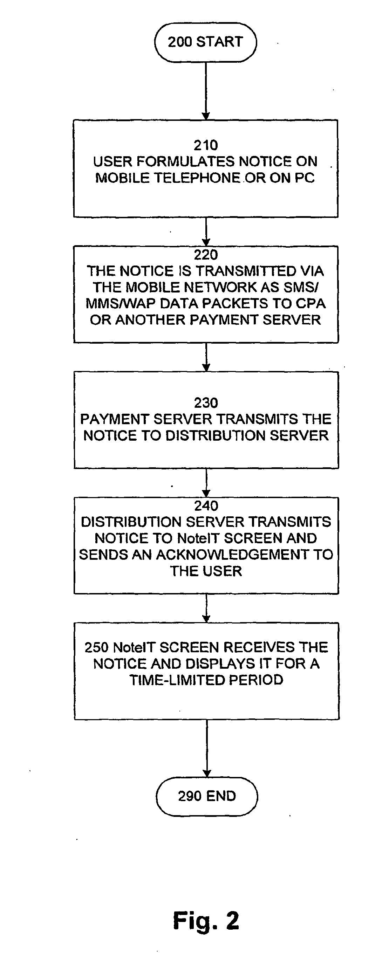

Figure 2 illustrates a schematic flow diagram for a communication process according to the invention. The process starts at start step 200. Subsequently, in step 210, the information supplier formulates a notice on the mobile telephone 110 or on a terminal such as a personal computer 112. In step 220 the notice is transmitted as SMS/MMS/WAP/data packets to the payment server 130.

If the information supplier employs a personal computer 112 instead of a mobile communication terminal 110, it is still possible to use MMS and/or SMS for message generation. This assumes that the information supplier has a mobile subscription and that the operator with whom the user subscribes offers MMS and/or SMS transmission from a web client via a web interface.

This means that a user can formulate a notice on a personal computer that comprises a web client, and send the notice via the data communication network 122 to a server 132 at the teleoperator, who in turn sends an MMS to the payment server 130. The rest of the communication protocol follows the protocol described above.

The reason for using a distribution server 140 is the teleoperator's price policy for CPA services. At present it is relatively costly to establish and operate a CPA number, but this may change.

As an alternative it is possible to cause the personal computer 112 to communicate with the distribution server 140 without taking the route via message services in the mobile communication network. In this case other payment/invoicing solutions will have to be employed.

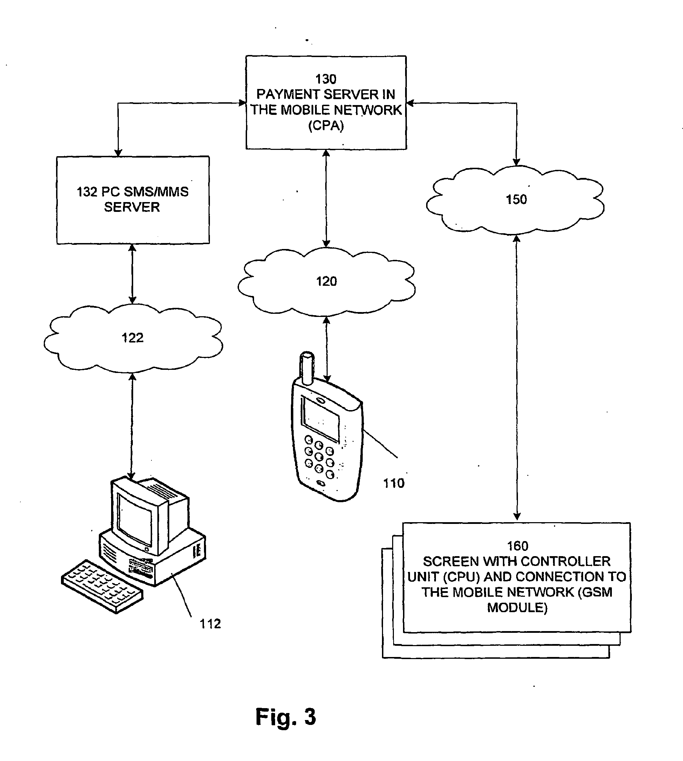

A second, alternative solution is for each display device to be assigned its own CPA number. This may be implemented through the CPA solution or an alternative payment solution such as, e.g. Payex and the like. Figure 3 illustrates the communication solution in such a case.

Figure 3 corresponds substantially with figure 1 described above, except for the fact that the distribution server 140 is omitted. The tasks performed by the distribution server 140 are therefore conducted by the payment server 130. In this embodiment, moreover, there is a payment server 130 for each display device 160.

The information supplier transmits the generated notice as an MMS to a CPA number which is unique for a display device. The payment server (CPA) can then initiate and possibly execute the payment/invoicing and pass the notice directly on to the display device 160.

A person who sees a notice on the display device and wishes to respond to the notice is described as an information recipient.

In an embodiment the information recipient can respond directly on the basis of contact information in the notice. Alternatively, the notice recipient can have the notice downloaded on to his mobile telephone via the distribution server or via the display device 160.

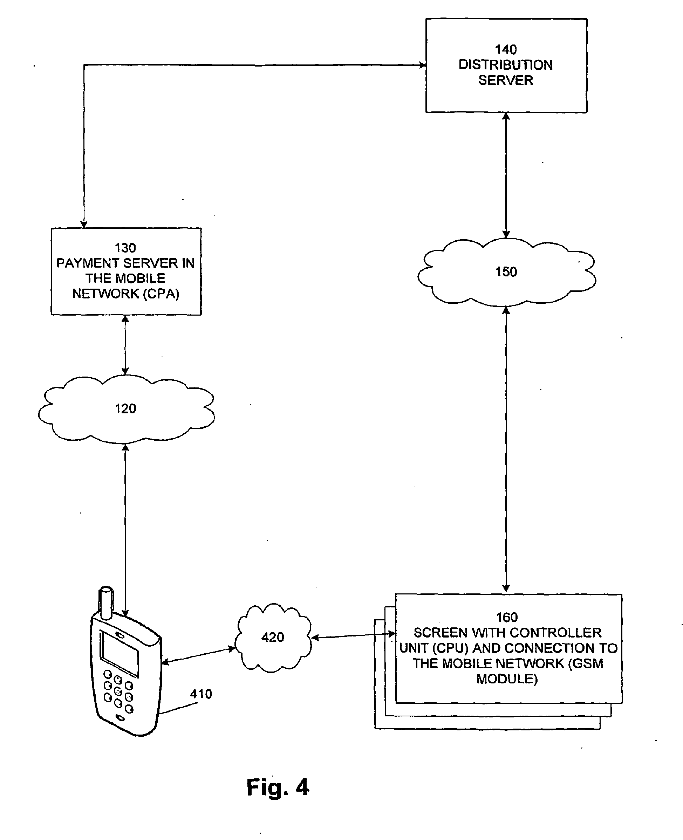

Figure 4 shows a schematic block diagram illustrating communication on the response of an information recipient to a notice. The downloading of the notice can be initiated by the information recipient sending a message identifying the notice identification from a mobile terminal, such as the mobile telephone 410, to a CPA number. A payment or invoicing transaction charged to the information recipient can thereby be initiated by means of the payment server 1.

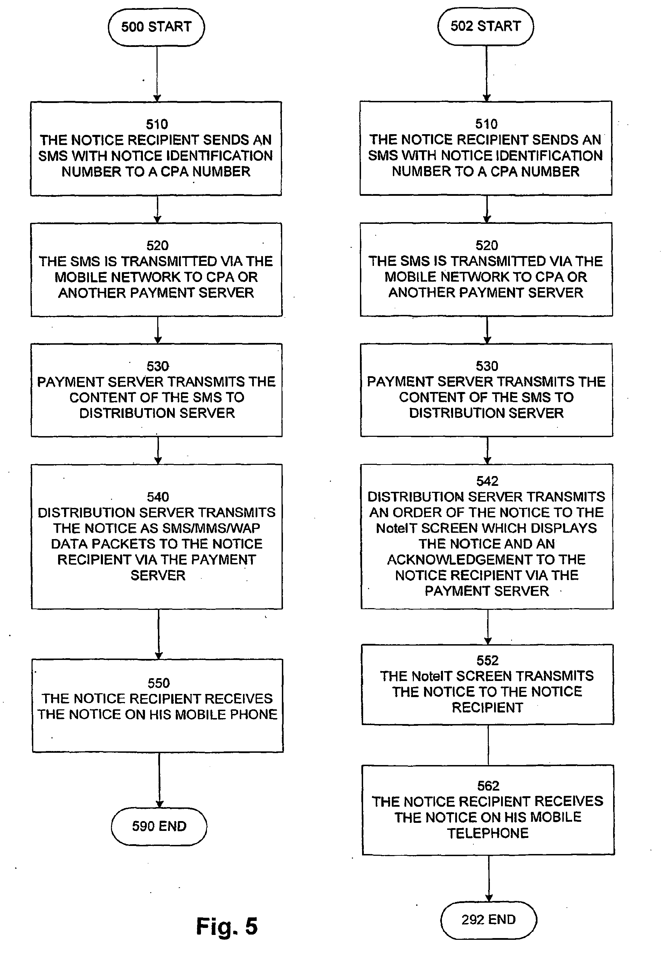

Figure 5 shows two schematic flow diagrams 5a and 5b illustrating two alternative communication flow processes on the response of an information recipient to a notice.

The diagram 5a on the left in figure 5 starts at the initiation step 500. In steps 510 and 520 the information recipient sends a third message, usually in the form of an SMS, comprising a notice identification, from the mobile terminal 410 to a CPA number associated with the payment server 130. Furthermore, in step 530 the payment server 130 transmits the contents of the third message to the distribution server 140. In step 540 the distribution server 140 extracts presentation data from the first message, and transmits these data by means of a fourth message which is transmitted by means of the payment server 130 via the mobile communication network 120 to the information recipient by the mobile terminal 410. In step 550 the information recipient receives the fourth message, and can thereby view the presentation data on the mobile telephone 410. The process is concluded at the termination step 590.

The diagram 5b illustrated on the right in figure 5 starts at the initiation step 502. The process continues in an identical manner to the flow diagram 5a up to and including step 530. After this, step 542 is performed, where the distribution server 140 transmits an order of the notice displayed on the display device 160, together with an acknowledgement, to the information recipient by means of the mobile terminal 410. Furthermore, in step 552 the display device 160 transmits presentation data for the notice to the information recipient by the mobile terminal 510. In step 550 the information recipient receives the presentation data on the mobile terminal 410. The process is concluded at the termination step 592.

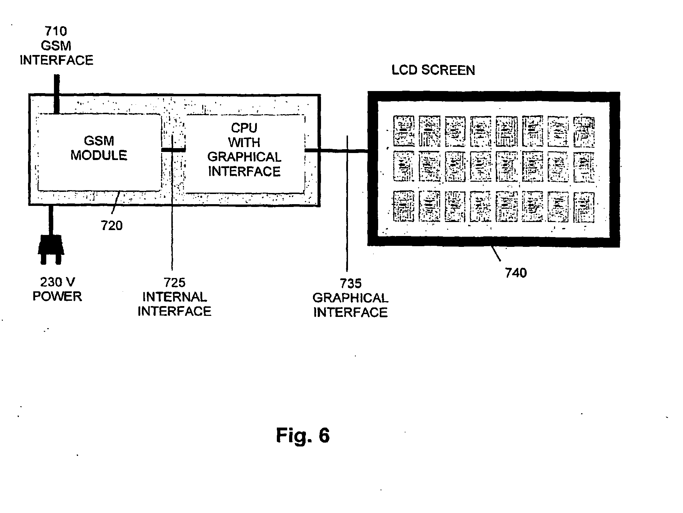

Figure 6 illustrates a schematic block diagram for a display device.

The display device comprises a display such as an LCD screen 740 and a control unit 710, which in turn comprise a CPU module 730 and a mobile communication module such as a GSM module 720. An arbitrary number of such display devices may be included in the system according to the invention. Each display device is intended to be mounted at a location where it can be viewed by the public, including potential information suppliers and potential information recipients.

The display 740 comprises, for example, a VGA interface, but may alternatively be chosen by a person skilled in the art. The CPU module 730 contains a microcontroller with software, a memory, a display interface 735 and an internal communication interface 725 with the mobile communication module 720.

The mobile communication module 720 is, for example, an M2M module (machine-to-machine) module. Among the suppliers of such modules are Wavecom/SonyEricsson and BenQSiemens. In an embodiment the GSM module has a wireless interface 710 which communicates with the mobile network, and an internal communication interface 725. The internal communication interface uses standardised AT commands via a serial connection (UART / RS232). The modules have support for GPRS.

The control unit 710 is configured to operate in the following manner:
- The GSM module receives a notice as an MMS message from the payment server (CPA) over the mobile network via its wireless interface 710.
- The GSM module stores this message in its local memory (not shown).
- The CPU module checks regularly whether a new notice has been posted. This is done via the internal communication interface 725.
- If so, the CPU module 730 loads the notice into its memory and then instructs the GSM module 720 to delete the notice.
- The CPU module makes one or more displays, consisting of one or more notices on a predefined background, which are delivered by the display interface 735.
- The CPU module 730 shows these displays sequentially on the LCD screen 740.

There are essentially two types of GSM modules; one for integrating in other equipment and one for connecting to other equipment. Figure 6 shows an internal GSM module for integration. Alternatively, an external GSM module 720 may be employed for connecting to other equipment. In this case the communication interface 725 will be an external interface. Which module type is most suitable is dependent on the number of units required. The GSM module for integration is less expensive to purchase, but has a higher development cost.

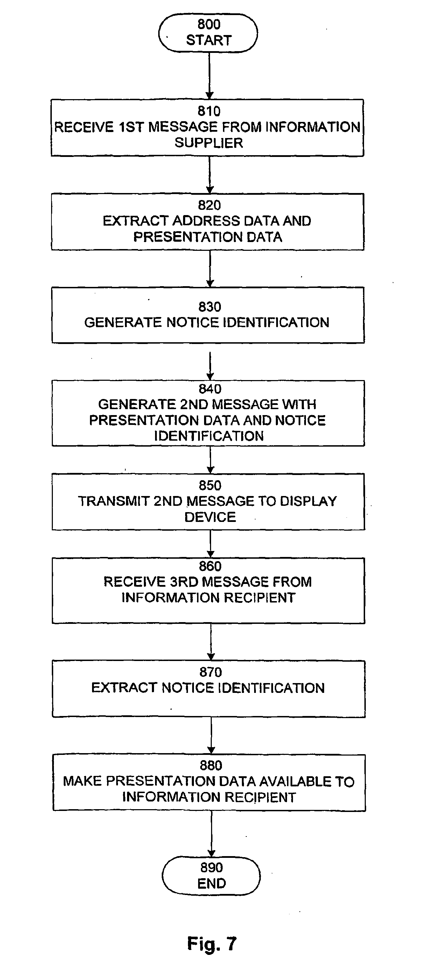

Figure 7 is a schematic block diagram illustrating a process which according to an embodiment of the invention can be executed by the payment server 130 and the distribution server 140 in communicative cooperation (this corresponds to the system design structurally illustrated in figure 1). According to another embodiment of the invention, the process may instead be executed by the payment server 130 alone (this corresponds to the alternative system design structurally illustrated in figure 3).

The process in figure 7 is a computer-implemented method for communicating information in the form of notices to be displayed on a display device.

The process starts at the initiation step 800.

First of all, in step 810, a first message is received from an information supplier, represented by a communication terminal such as a mobile telephone or a personal computer, as mentioned earlier with reference, amongst other things, to fig. 1.

In step 820, from the received, first message address data are extracted identifying a display device, and presentation data representing the notice to be displayed on the display device.

In an embodiment the extraction of the address data comprises providing a telephone number associated with the identified display device.

The presentation data may have a data type selected from the group including: text data, picture data, animation data and video data. They may further comprise other data types.

In step 830 a notice identification is generated identifying the notice that is to be displayed on the display device.

In step 840 a second message is generated. This comprises the presentation data and the notice identification.

In step 850 the second message is transmitted to the display device which is identified by the address data. As described earlier, the display device is arranged to display the presentation data and the notice identification.

Furthermore, from and including step 860 a second phase of the method is illustrated, corresponding to an information recipient responding to the notice.

This phase is initiated by the information recipient sending a third message. This third message is received in step 860.

In step 870 a notice identification is extracted from the third message.

In step 880 presentation data is made available to the information recipient. This can be implemented either by the presentation data being transmitted to the information recipient in the form of a fourth message, or by a reference permitting downloading of the presentation data being transmitted to the information recipient, i.e. to the information recipient's mobile terminal. In the former case the fourth message may be an MMS. In the latter case the reference may be in the form of an address, and the downloading may be carried out via WAP.

Consistent with an aspect of the invention, the first, second, third and fourth messages are of a message type selected from the group comprising SMS and MMS.

In an embodiment the method further comprises initiating a payment or invoicing transaction for charging the information recipient. Such a transaction may be covered by known CPA solutions where the settlement is undertaken by the mobile operator.

In another embodiment the method further comprises initiating a payment or invoicing transaction for charging the information supplier. This transaction too may be covered by known CPA solutions where the settlement is undertaken by the mobile operator.

In an embodiment the method also comprises adding administration to the second message. In these administration data are included time data indicating the time of display of the notice on the display device. In this embodiment, moreover, the display device is arranged to extract these administration data, and to display the notice for a period corresponding to the time data.

The first message received from the information supplier may originate either in a message sent from a mobile terminal operated by the information supplier, or a message generated in a message server, which for its part is operated by the information supplier by means of a client computer in a network.

Above it has been indicated that the address data which is contained in the first message (and which is extracted from the first message in step 820) identifies a display device 160. In an alternative embodiment the address data contained in the first message indicates a so-called notice type instead. Such a notice type identifies both a display device and at least one attribute of the notice that shall be displayed. According to an aspect of the invention the attributes may comprise the size of the notice. According to another aspect of the invention the attributes may comprise a limited field/area of the display device. According to a further aspect of the invention the attributes may comprise a time slot in a presentation sequence. According to another aspect of the invention the attributes may comprise a price associated with the presentation.

When a notice type is used as address data, a single display device may be divided in various fields, wherein each field corresponds to a particular notice type.

In an example which is not necessarily limiting, three different notice types are included for each display device, wherein each notice type is associated with ine particular notice size, a price and a time slot. The three notice types may be: a "small" notice, of which there will be room for 15 on a page; a "large" notice, of which there will be room for 8 on a page; and a "full screen" notice, which will fill the entire screen. It will be realized that other numbers of notice types (such as 1, 2, 4, 5 or more) and more variants of notice types are possible.

In an example which is not necessarily limiting, the address data may be indicated by the alphanumerical text strings "STA21" for a "small" notice and "STA22" for "large" notice, wherein the four opening characters - "STA2" - indicate an identification of the relevant display device, while the last character - "1" or "2", respectively, indicates the attribute of the notice, in this case the size of the notice.

It will be understood that various notice types and number of notice types may be used for different display devices or groups of display devices.

Above it has been indicated that the presentation data may have a data type which is selected from the group including text data, picture data, animation data, and video data. It will be understood that the group also may include audio data, and that the presentation data may comprise any combination of the various types of data.

Above it has been indicated that each of the first, second, third and fourth messages have a message type selected from the group comprising SMS and MMS. It will be understood that other message types may be used in the invention. Particularly, it may be relevant for the second message, which is transmitted to the display device, to avoid a message type that involves increased cost per transmitted message. Also, it may be desirable, taking resources and costs into account, not to allocate a fixed network address, such as an IP address, to each display device. A relevant alternative is therefore that the second message type is based on IP communication via a mobile network, and further based on temporary IP addresses. A practical example to this is a message broker solution such as IBM's MQTT.

Above it has been indicated that the step of making the presentation data available to the information recipient comprises to transmit either the presentation data or a reference that permits downloading of the presentation data, to the information recipient. In accordance with an aspect of the invention this step may comprise to send a reference that permits the downloading of a further data object which is associated with the presentation data. Such a further data object may e.g. be a data object of "mobile content" type, such as digitally coded audio data, e.g. in MP3 format, or an executable mobile application, such as a Java application. Alternatively the data object may represent a ticket to an event or a service, e.g. a concert or a transportation service. The fact that the further object shall be associated with the presentation data will be understood as meaning that there is an association or an information-related link between the presentation data and the further data object, which may e.g. be established by an enquiry to a database, initiated by the distribution server 140 or the payment server 130.

The above detailed description is presented as an example, and many alternatives and variations will exist within the scope of the invention, as will be apparent in the patent claims.

## Claims

1. A computer-implemented method for distributing and displaying information in the form of a notice to be displayed on a display device, where the method comprises:
- receiving a first message from an information supplier;
- extracting from the received, first message:
- address data identifying at least one of a plurality of display devices, and
- presentation data representing the notice to be displayed on the at least one display device;
- generating a notice identification identifying the notice to be displayed on the at least one display device,
- generating a second message, including said presentation data and said notice identification,
- transmitting the second message to the at least one display device identified by said address data, such that said presentation data and said notice identification can be displayed on the at least one display device,
- upon receiving a third message from an information recipient, said third message including said notice identification:
- extracting the notice identification from said third message, and
- transmitting said presentation data, or a reference to said presentation data, to said information recipient.

2. A method according to claim 1,
where the step of transmitting said presentation data, or a reference to said presentation data, comprises transmitting the presentation data to the information recipient in the form of a fourth message.

3. A method according to claim 1,
where the step of transmitting said presentation data, or a reference to said presentation data, comprises sending the information recipient a reference to the presentation data, which permits downloading of the presentation data.

4. A method according to one of the claims 1-3,
further comprising initiating a payment or invoicing transaction for charging at least one of the information recipient or the information supplier.

5. A method according to one of the claims 1-4,
where said presentation data have a data type selected from the group comprising: text data, picture data, animation data and video data.

6. A method according to one of the claims 1-5,
where the first, second, third and fourth message have a message type selected from the group comprising: SMS and MMS.

7. A method according to one of the claims 1-6,
executed by a payment server (CPA) or in communicative cooperation between a payment server (CPA) and a distribution server.

8. A method according to one of the claims 1-7,
where the extraction of said address data comprises providing a telephone number associated with said display device.

9. A method according to one of the claims 1-8,
further comprising adding administration data to the second message, including time data for displaying the notice, where the display device is arranged to extract said administration data and to display the notice for a period corresponding to said time data.

10. A method according to one of the claims 1-9,
where said first message originates in:
- a message sent from a mobile terminal operated by the information supplier; or
- a message generated in a message server operated by the information supplier by means of a client computer in a network.

11. A method according to one of the claim 1-7,
wherein the extracting of said address data comprises providing a notice type associated with said display device.

12. Method according to one of the claims 1-11,
wherein the step of transmitting said presentation data, or a reference to said presentation data, comprises transmitting to the information recipient a reference to a further data object associated with said presentation data.

13. An information communicating device for distributing and displaying information in the form of notices to be displayed on at least one of a plurality of display devices, comprising data processing devices configured to execute each of the steps of a method according to one of the claims 1-12.

14. A system for distributing and displaying information in the form of notices to be displayed on at least one of a plurality of display devices, comprising
- a terminal being adapted to be operated by an information supplier, for generating and sending a first message from the information supplier;
- an information communicating device as indicated in claim 13; and
- a display device for displaying said notices.

15. A system according to claim 14,
further comprising communication network connections between the terminal, the information communicating device and the display device.

16. A system according to one of the claims 14-15,
where the display device comprises
a mobile communication module, a control unit and a display.

## Patentansprüche

1. Computerimplementiertes Verfahren zum Verteilen und Anzeigen von einer Information in der Form von einer auf einer Anzeigevorrichtung anzuzeigenden Meldung, wobei das Verfahren enthält:
Empfangen von einer ersten Meldung von einem Informationsanbieter;
Extrahieren aus der empfangenen ersten Meldung von:
Adressdaten, welche zumindest eine von einer Mehrzahl von Anzeigevorrichtungen identifizieren, und
Präsentationsdaten, welche die auf der zumindest einen Anzeigevorrichtung anzuzeigende Meldung darstellen;
Erzeugen von einer Meldungsidentifikation, welche die auf der zumindest einen Anzeigevorrichtung anzuzeigende Meldung identifiziert,
Erzeugen von einer zweiten Meldung, welche die Präsentationsdaten und die Meldungsidentifikation enthält,
Übertragen von der zweiten Meldung an die zumindest eine Anzeigevorrichtung, welche durch die Adressdaten identifiziert ist, so dass die Präsentationsdaten und die Meldungsidentifikation auf der zumindest einen Anzeigevorrichtung angezeigt werden können,
nach einem Empfangen von einer dritten Meldung von einem Informationsempfänger, wobei die dritte Meldung die Meldungsidentifikation enthält:
Extrahieren der Meldungsidentifikation aus der dritten Meldung, und
Übertragen der Präsentationsdaten oder einer Referenz auf die Präsentationsdaten an den Informationsempfänger.

2. Verfahren nach Anspruch 1,
bei welchem der Schritt zum Übertragen der Präsentationsdaten oder einer Referenz auf die Präsentationsdaten ein Übertragen der Präsentationsdaten an den Informationsempfänger in der Form von einer vierten Meldung enthält.

3. Verfahren nach Anspruch 1,
bei welchem der Schritt des Übertragens der Präsentationsdaten oder einer Referenz auf die Präsentationsdaten ein Senden von einer Referenz auf die Präsentationsdaten an den Informationsempfänger enthält, welches ein Herunterladen von den Präsentationsdaten erlaubt.

4. Verfahren nach einem der Ansprüche 1 bis 3,
welches ferner ein Initiieren von Bezahlungs- oder Abrechnungs-Transaktionen zur Verrechnung von zumindest einem aus dem Informationsempfänger oder dem Informationsanbieter enthält.

5. Verfahren nach einem der Ansprüche 1 bis 4,
bei welchem die Präsentationsdaten einen Datentyp haben, welcher aus der Gruppe ausgewählt ist, welche enthält:
Textdaten, Bilddaten, Animationsdaten und Videodaten.

6. Verfahren nach einem der Ansprüche 1 bis 5,
bei welchem die erste, zweite, dritte und vierte Meldung einen Meldungstyp haben, welcher aus der Gruppe ausgewählt ist, welche enthält: SMS und MMS.

7. Verfahren nach einem der Ansprüche 1 bis 6,
ausgeführt durch einen Bezahlungs-Server (CPA) oder in kommunikativer Kooperation zwischen einem Bezahlungs-Server (CPA) und einem Verteilungs-Server.

8. Verfahren nach einem der Ansprüche 1 bis 7,
bei welchem die Extraktion von den Adressdaten ein Bereitstellen von einer Telefonnummer in Zusammenhang mit der Anzeigevorrichtung enthält.

9. Verfahren nach einem der Ansprüche 1 bis 8,
welches ferner ein Hinzufügen von Administrationsdaten zu der zweiten Meldung enthält, welche Zeitdaten zum Anzeigen der Meldung enthalten, wobei die Anzeigevorrichtung dazu angeordnet ist, die Administrationsdaten zu extrahieren und die Meldung für eine Zeitperiode anzuzeigen, welche den Zeitdaten entspricht.

10. Verfahren nach einem der Ansprüche 1 bis 9,
bei welchem die erste Meldung erzeugt wird in:
einer Meldung, welche von einem Mobil-Endgerät gesendet wird, welches durch den Informationsanbieter betrieben wird; oder
einer Meldung, welche in einem Meldungs-Server erzeugt wird, welcher durch den Informationsanbieter mittels eines Client-Computers in einem Netzwerk betrieben wird.

11. Verfahren nach einem der Ansprüche 1 bis 7,
bei welchem die Extraktion von den Adressdaten ein Bereitstellen von einem Meldungstyp in Zusammenhang mit der Anzeigevorrichtung enthält.

12. Verfahren nach einem der Ansprüche 1 bis 11,
bei welchem der Schritt des Übertragens der Präsentationsdaten oder einer Referenz auf die Präsentationsdaten ein Übertragen von einer Referenz über ein weiteres Datenobjekt in Zusammenhang mit den Präsentationsdaten an den Informationsempfänger enthält.

13. Informations-Kommunikationsvorrichtung zum Verteilen und Anzeigen von einer Information in der Form von Meldungen, welche auf zumindest einer von einer Mehrzahl von Anzeigevorrichtungen anzuzeigen sind, welche Datenverarbeitungsvorrichtungen enthält, welche dazu ausgelegt sind, jeden der Schritte eines Verfahrens nach einem der Ansprüche 1 bis 12 auszuführen.

14. System zum Verteilen und Anzeigen von einer Information in der Form von Meldungen, welche auf zumindest einer von einer Mehrzahl von Anzeigevorrichtungen anzuzeigen sind, welches enthält:
ein Endgerät, welches dazu ausgelegt ist, von einem Informationsanbieter betrieben zu werden, um eine erste Meldung von dem Informationsanbieter zu erzeugen und zu senden;
eine Informations-Kommunikationsvorrichtung nach Anspruch 13; und
eine Anzeigevorrichtung zum Anzeigen der Meldungen.

15. System nach Anspruch 14,
welches ferner Kommunikations-Netzwerkverbindungen zwischen dem Endgerät, der Informations-Kommunikationsvorrichtung und der Anzeigevorrichtung enthält.

16. System nach einem der Ansprüche 14 oder 15,
bei welchem die Anzeigevorrichtung enthält:
ein Mobil-Kommunikationsmodul, eine Steuereinheit und eine Anzeige.

## Revendications

1. Procédé mis en oeuvre par un ordinateur pour distribuer et afficher des informations sous la forme d'un avis à afficher sur un dispositif d'affichage, le procédé consistant à :
■ recevoir un premier message d'un fournisseur d'informations ;
■ extraire du premier message reçu :
■ des données d'adresse identifiant au moins l'un d'une pluralité de dispositifs d'affichage, et
■ des données de présentation représentant l'avis à afficher sur ledit au moins un dispositif d'affichage ;
■ générer une identification d'avis identifiant l'avis à afficher sur ledit au moins un dispositif d'affichage,
■ générer un deuxième message, comprenant lesdites données de présentation et ladite identification d'avis,
■ transmettre le deuxième message audit au moins un dispositif d'affichage identifié par lesdites données d'adresse, de sorte que lesdites données de présentation et ladite identification d'avis puissent être affichées sur ledit au moins un dispositif d'affichage,
■ lors de la réception d'un troisième message d'un destinataire des informations, ledit troisième message comprenant ladite identification d'avis :
■ extraire l'identification d'avis dudit troisième message, et
■ transmettre lesdites données de présentation, ou une référence auxdites données de présentation, audit destinataire des informations.

2. Procédé selon la revendication 1, dans lequel l'étape de transmission desdites données de présentation, ou d'une référence auxdites données de présentation, comprend la transmission des données de présentation au destinataire des informations sous la forme d'un quatrième message.

3. Procédé selon la revendication 1, dans lequel l'étape de transmission desdites données de présentation, ou d'une référence auxdites données de présentation, comprend l'envoi au destinataire des informations d'une référence aux données de présentation, ce qui permet le téléchargement des données de présentation.

4. Procédé selon l'une des revendications 1 à 3, comprenant en outre le lancement d'un paiement ou d'une transaction de facturation pour facturer au moins l'un du destinataire des informations ou du fournisseur d'informations.

5. Procédé selon l'une des revendications 1 à 4, dans lequel lesdites données de présentation ont un type de données sélectionné dans le groupe comprenant : des données de texte, des données d'image, des données d'animation et des données vidéo.

6. Procédé selon l'une des revendications 1 à 5, dans lequel les premier, deuxième, troisième et quatrième messages ont un type de message sélectionné dans le groupe comprenant : un SMS et un MMS.

7. Procédé selon l'une des revendications 1 à 6, exécuté par un serveur de paiement (CPA) ou en coopération de communication entre un serveur de paiement (CPA) et un serveur de distribution.

8. Procédé selon l'une des revendications 1 à 7, dans lequel l'extraction desdites données d'adresse comprend la fourniture d'un numéro de téléphone associé audit dispositif d'affichage.

9. Procédé selon l'une des revendications 1 à 8, comprenant en outre l'ajout de données d'administration au deuxième message, comprenant des données de temps pour afficher l'avis, dans lequel le dispositif d'affichage est agencé pour extraire lesdites données d'administration et pour afficher l'avis pendant une période correspondant auxdites données de temps.

10. Procédé selon l'une des revendications 1 à 9, dans lequel ledit premier message provent :
■ d'un message envoyé à partir d'un terminal mobile mis en oeuvre par le fournisseur d'informations ; ou
■ d'un message généré dans un serveur de messages mis en oeuvre par le fournisseur d'informations au moyen d'un ordinateur client dans un réseau.

11. Procédé selon l'une des revendications 1 à 7, dans lequel l'extraction desdites données d'adresse comprend la fourniture d'un type d'avis associé audit dispositif d'affichage.

12. Procédé selon l'une des revendications 1 à 11, dans lequel l'étape de transmission desdites données de présentation, ou d'une référence auxdites données de présentation, comprend la transmission, au destinataire des informations, d'une référence à un objet de données supplémentaire associé auxdites données de présentation.

13. Dispositif de communication d'informations pour distribuer et afficher des informations sous la forme d'avis à afficher sur au moins l'un d'une pluralité de dispositifs d'affichage, comprenant des dispositifs de traitement de données configurés pour exécuter chacune des étapes d'un procédé selon l'une des revendications 1 à 12.

14. Système pour distribuer et afficher des informations sous la forme d'avis à afficher sur au moins l'un d'une pluralité de dispositifs d'affichage, comprenant :
■ un terminal adapté pour être mis en oeuvre par un fournisseur d'informations, pour générer et envoyer un premier message du fournisseur d'informations ;
■ un dispositif de communication d'informations tel qu'indiqué dans la revendication 13 ; et
■ un dispositif d'affichage pour afficher lesdits avis.

15. Système selon la revendication 14, comprenant en outre des connexions de réseau de communication entre le terminal, le dispositif de communication d'informations et le dispositif d'affichage.

16. Système selon l'une des revendications 14 et 15, dans lequel le dispositif d'affichage comprend: un module de communication mobile, une unité de commande et un afficheur.
